# EUROPÄISCHE PATENTSCHRIFT

(11) **EP 2 032 871 B1**
(45) Veröffentlichungstag und Bekanntmachung des Hinweises auf die Patenterteilung: **17.10.2012**
(21) Anmeldenummer: 07764886.3
(22) Anmeldetag: 27.06.2007
(51) Int. Cl.: F16F 9/34, F16F 9/348

(54) **DÄMPFUNGSELEMENT**
DAMPING ELEMENT
ÉLÉMENT D'AMORTISSEMENT

(30) Priorität: 27.06.2006 DE 102006029380
(43) Veröffentlichungstag der Anmeldung: 11.03.2009
(73) Patentinhaber: ThyssenKrupp Bilstein Suspension GmbH, 58240 Ennepetal (DE)
(72) Erfinder: KAIS, Saadeddin, 44866 Bochum (DE)
(74) Vertreter: Albrecht, Rainer Harald
(86) Internationale Anmeldenummer: PCT/EP2007/005685
(87) Internationale Veröffentlichungsnummer: WO 2008/000460

(56) Entgegenhaltungen:
- EP-A- 0 336 692
- DE-A1- 2 103 153
- DE-A1- 4 343 614
- DE-A1- 10 245 404
- DE-B- 2 057 276
- FR-A- 1 545 406
- US-A- 3 003 594

## Beschreibung

Die Erfindung betrifft ein Dämpfungselement für einen mit hydraulischer Dämpfungsflüssigkeit arbeitenden Schwingungsdämpfer mit den Merkmalen des Oberbegriffs des Patentanspruchs 1. Solche Dämpfungselemente werden z. B. als Dämpfventilkörper oder auch als Dämpfungskolben in hydraulischen und hydropneumatischen Fahrzeugschwingungsdämpfern eingesetzt, mit denen die Bewegungen des Fahrzeugaufbaus gedämpft werden. Über derartige Dämpfungselemente wird das Dämpfungsverhalten der Radaufhängung und damit auch der bei bestimmten Dämpferkolbengeschwindigkeiten erreichbare Fahrkomfort eingestellt bzw. beeinflusst.

Zum grundsätzlichen Aufbau des Dämpfungselementes gehören ein als Kreisscheibe ausgebildeter einteiliger Grundkörper, der eine Mehrzahl erster Durchflussöffnungen mit jeweils einem Eintrittsquerschnitt in einer ersten Stirnseite des Grundkörpers sowie eine Mehrzahl zweiter Durchflussöffnungen mit jeweils einem Eintrittsquerschnitt in einer gegenüberliegenden zweiten Stirnseite des Grundkörpers aufweist, sowie kreisförmige Ventilscheiben an beiden Stirnseiten des Grundkörpers, die an einer mittig angeordneten Stützfläche des Grundkörpers anliegen und Austrittsquerschnitte der Durchflussöffnungen zumindest teilweise verschließen. Die Austrittsquerschnitte sind von Steuerkanten umgeben, welche Anlageflächen für die Ventilscheiben bilden und die Stützfläche sowie die Eintrittsquerschnitte überragen. Die Höhe der Steuerkanten steigt mit zunehmendem radialem Abstand vom Mittelpunkt des kreisscheibenförmigen Grundkörpers an.

Ein Dämpfungselement mit den vorstehend beschriebenen Merkmalen ist aus DE 20 57 276 bekannt. Das bekannte Dämpfungselement enthält zwei Durchflussöffnungen, die in der ersten Richtung durchströmbar sind, sowie um 90° zu diesen versetzt zwei weitere Durchflussöffnungen, die in entgegengesetzter Richtung durchströmt werden. An den Stirnseiten des Dämpfungselementes sind rechteckförmige Ventilscheiben angeordnet, die durch Arretierbügel in einer definierten Lage gehalten werden. Allerdings sollen auch kreisförmige Ventilscheiben einsetzbar sein. Bei der Verwendung kreisrunder Ventilscheiben besteht allerdings die Gefahr, dass die auf dem Weg zu den Einlassquerschnitten unterströmten Ventilscheiben sich unter der Wirkung einer strömungsbedingten lokalen Druckabsenkung durchbiegen und damit den Grundwiderstand des Dämpfungselementes markant verändern.

Aus DE 19 79 961 ist ein Dämpfungselement bekannt, das mit rechteckförmigen Ventilscheiben bestückt ist. Die Ventilscheiben sind über Kreuz angeordnet. Eine ordnungsgemäße Funktion des Dämpfungselementes ist nur dann gewährleistet, wenn die rechteckförmigen Ventilscheiben bei der Montage exakt ausgerichtet werden und die Zentrierung der Scheiben über die gesamte Lebensdauer des Dämpfungselementes gewährleistet werden kann. Ferner können bei Verwendung rechteckförmiger Federscheiben Dämpfungskennlinien mit hohen Kraftwerten nur schwer erreicht werden.

Ferner wird in DE 100 05 180 C1 ein Dämpfungselement beschrieben, dessen scheibenförmiger Grundkörper als Prägestanzteil hergestellt ist. Herstellungsbedingt sind die auf einer Dämpferventilseite erhabenen Ventilkörperbereiche auf der axial gegenüberliegenden Ventilseite als Vertiefungen ausgebildet. Entsprechend weisen die Durchflussöffnungen vom Eintrittsquerschnitt bis zum Austrittsquerschnitt einen gleichbleibenden Querschnitt auf. Ferner sind die Steuerkanten planparallel zur Stirnseite des Grundkörpers ausgerichtet. Um eine ausreichende Schließkraft der Ventilscheiben sicherstellen zu können, müssen diese mittels eines zusätzlichen Federelementes gegen die Ventilauflagefläche vorgespannt werden.

Bei einem Dämpfungselement mit den eingangs beschriebenen Merkmalen wirken die auf beiden Stirnseiten angeordneten Ventilscheiben, mit der die Austrittsöffnungen der Durchtrittskanäle zumindest teilweise abgedeckt werden, mit den Durchflussöffnungen in einer Durchströmungsrichtung nach Art eines federbelasteten Druckbegrenzungsventils zusammen, welches bei Erreichen eines bestimmten Öffnungsdruckes bzw. einer bestimmen Dämpferkolbengeschwindigkeit öffnet und erst dann seine Dämpfungswirkung entfaltet. In der entgegengesetzten Durchströmungsrichtung wirken die Ventilscheiben als Rückschlagventile. Diese Ventilanordnung stellt die dem Fachmann wohlbekannte Bauform federkraftbeaufschlagter Dämpfungsventile dar, mit denen sogenannte degressive Dämpfungskraftverläufe erzielt werden (vgl. z. B. Reimpell/Stoll: "Fahrwerktechnik: Stoß- und Schwingungsdämpfer", Vogel Buchverlag Würzburg, 2. Auflage 1989, Seiten 49 bis 51). Unter einem degressiven Dämpfungskraftverlauf wird dabei in der Regel ein solcher Verlauf der Dämpfungskennlinie im Kraft-Geschwindigkeits-Diagramm (F-v-Diagramm) verstanden, bei dem die Dämpfkraft zunächst in einem ersten Kennlinienabschnitt bei geringen Dämpferkolbengeschwindigkeiten steil ansteigt, und der dann mit weiter zunehmender Dämpferkolbengeschwindigkeit in einen mehr oder weniger flach ansteigenden, im Wesentlichen linear verlaufenden Kennlinienabschnitt übergeht.

In der Praxis werden bei geringen Dämpferkolbengeschwindigkeiten, d. h. bei geringen v-Werten im F-v-Diagramm, die z. B. bei ruhiger Fahrt auf einer ebenen Asphaltstrecke vorliegen, relativ geringe Dämpfungskräfte (F-Werte im F-v-Diagramm) gefordert, damit im Bereich geringer Dämpferkolbengeschwindigkeiten ein möglichst hoher Fahrkomfort erreicht wird. Gleichzeitig soll die Dämpfungswirkung im Bereich hoher Dämpferkolbengeschwindigkeiten groß sein, um u. a. eine ausreichende Fahrstabilität des Fahrzeuges zu gewährleisten. Die bekannten Anordnungen bieten nur vergleichsweise geringe Möglichkeiten, das Dämpfungsverhalten des Schwingungsdämpfers an die gestellten Anforderungen anzupassen. Bei der Festlegung der Federsteifigkeit der Ventilscheiben und/oder ihrer Vorspannung muss stets ein Kompromiss gefunden werden, der einerseits bei hohen Dämpferkolbengeschwindigkeiten eine ausreichende Fahrstabilität und andererseits bei mittleren und niedrigen Dämpferkolbengeschwindigkeiten einen ausreichenden Fahrkomfort gewährleistet.

Ferner besteht bei Dämpfungselementen, die den eingangs beschriebenen Aufbau aufweisen, das Problem, dass die auf dem Strömungsweg zu den Eintrittsquerschnitten unterströmten Ventilscheiben einer strömungsbedingten lokalen Druckabsenkung nach dem Bernoulli-Effekt ausgesetzt sind. Die Druckabsenkung kann zu einer Durchbiegung der Federscheiben führen, die in Abhängigkeit der Strömungsgeschwindigkeit den Grundwiderstand undefiniert verändert.

Vor diesem Hintergrund liegt der Erfindung die Aufgabe zugrunde, ein Dämpfungselement gemäß dem Oberbegriff des Patentanspruches 1 derart weiter zu bilden, dass unter Beibehaltung eines einfachen konstruktiven Aufbaus das Dämpfungsverhalten des Dämpfungselementes besser und in definierter Weise an die gestellten Anforderungen angepasst werden kann. Es wird ein Dämpfungskraftverlauf im F-v-Diagramm angestrebt, der sich durch einen flachen Degressionskurvenverlauf über einen großen Geschwindigkeitsbereich auszeichnet. Ferner soll der Übergangsbereich zwischen niedriger und hoher Dämpfung so einstellbar sein, dass im Bereich einer mittleren Dämpfungskraftgeschwindigkeit ein Optimum an Fahrkomfort gewährleistet werden kann.

Diese Aufgabe wird durch ein Dämpfungselement mit den Merkmalen des Patentanspruches 1 gelöst. Vorteilhafte Weiterbildungen sind in den Ansprüchen 2 bis 14 angegeben.

Bei der Erfindung ist vorgesehen, dass die Steuerkanten die Stützfläche überragen und die Höhe, um die die Steuerkanten die Stützfläche überragen, mit zunehmendem radialen Abstand vom Mittelpunkt des kreisscheibenförmigen Grundkörpers ansteigt. Dadurch steigt in radialer Richtung der axiale Abstand an, den die Steuerkanten gegenüber der Stützfläche aufweisen. Durch ein Spannelement werden die Ventilscheiben gegen die Stützfläche des Grundkörpers gespannt, so dass sich die an den Steuerkanten anliegenden Ventilscheiben durchbiegen und dicht auf der Stirnfläche der Steuerkanten aufliegen. Auf diese Weise bildet sich eine Vorspannkraft der Ventilscheiben aus, die den Öffnungsdruck des Dämpfungsventils bestimmt oder zumindest mitbestimmt. Über das Maß, mit dem die Höhe in radialer Richtung ansteigt, und um die die Steuerkanten die Stützfläche überragen, lässt sich die Größe der Vorspannkraft der Ventilscheiben und damit der Öffnungsdruck des Dämpfungsventils gezielt einstellen.

Aufgrund der erfindungsgemäßen Gestaltung des Verlaufs der Steuerkanten relativ zu dem Grundkörper bzw. relativ zu dessen Stützfläche weisen die Steuerkanten von radial außen in Richtung Mittelpunkt des Grundkörpers gesehen einen schrägen, zur Grundkörpermitte hin abfallenden Verlauf auf. Die Stirnflächen der Steuerkanten bilden Anlageflächen für die Ventilscheiben, wobei der Grundkörper des Dämpfungselementes im Bereich seines Mittelpunktes Stützflächen für die Ventilscheiben aufweist, die in axialer Richtung gegenüber den Steuerkanten zurückversetzt ist.

Erfindungsgemäß weisen die Durchflussöffnungen einen Strömungskanalabschnitt auf, der in einen von den Steuerkanten berandeten größeren Austrittsquerschnitt einmündet. Der Strömungskanalabschnitt ist vorzugsweise zylindrisch ausgebildet. Vorzugsweise geht er mit einer stetigen Querschnittserweiterung in den von der Steuerkante berandeten Austrittsquerschnitt über. Die Querschnittserweiterung kann als konisch oder als konvex gekrümmte Fläche ausgebildet sein.

Erfindungsgemäß ändert sich der Strömungsquerschnitt der Durchflussöffnungen vom Eintrittsquerschnitt zum Austrittsquerschnitt hin, wobei der Austrittsquerschnitt wesentlich größer ist als der Strömungsquerschnitt des zu ihm hin führenden Strömungskanalabschnitts. Die Steuerkanten, die den Austrittsquerschnitt beranden, übernehmen die bereits bestehende Abdichtfunktion für die verschließenden Federscheiben. Durch die umlaufende Steuerkante wird die Abdichtlänge zwischen der Ventilscheibe und dem Grundkörper vergrößert. Das hat zur Folge, dass schon bei kleinen Scheibenöffnungshüben große Mengen an Hydraulikflüssigkeit abfließen können. Es ergibt sich eine weiche Kennung mit einem flachen Degressionskurvenverlauf.

Die Austrittsquerschnitte an beiden Stirnseiten des Grundkörpers weisen vorzugsweise einen nierenförmigen Grundriss auf und sind in Umfangsrichtung im Wechsel mit jeweils einem Eintrittsquerschnitt angeordnet. Die bevorzugte Ausführung der Erfindung sieht vor, dass der Grundkörper sechs Durchflussöffnungen aufweist, wobei an beiden Stirnseiten drei von Steuerkanten berandete Austrittsquerschnitte im Wechsel mit drei Eintrittsquerschnitten angeordnet sind.

In weiterer Ausgestaltung lehrt die Erfindung, dass die Eintrittsquerschnitte gegenüber der Stützfläche Vertiefungen bilden, die sich stirnseitig bis zum Außenrand oder zumindest bis zu einem randnahen Bereich des Grundkörpers erstrecken und den Raum zwischen den Steuerkanten benachbarter Austrittsquerschnitte ausfüllen. Der Eintrittsquerschnitt ist beispielsweise als zwickelförmige Vertiefung ausgebildet, die von einem Zylinderabschnitt der Durchgangsöffnung sowie seitlich von den Steuerkanten benachbarter Austrittsquerschnitte begrenzt ist. Durch die erfindungsgemäße Erweiterung des Eintrittsquerschnittes kann der Grundwiderstand des Dämpfungselementes deutlich reduziert werden. Das Dämpfungselement weist dadurch ein feinfühligeres Ansprechverhalten auf und der Fahrkomfort eines Fahrzeuges, dessen Schwingungsdämpfer mit den erfindungsgemäßen Dämpfungselementen ausgestattet sind, wird verbessert.

Bei dem erfindungsgemäßen Dämpfungselement sind mehrere Durchflussöffnungen für jede Durchflussrichtung der Dämpfungsflüssigkeit vorgesehen, d. h. es sind zwei oder mehr Durchflussöffnungen für die Zugstufendämpfung und zwei oder mehr Durchflussöffnungen für die Druckstufendämpfung des Schwingungsdämpfers vorgesehen. Die jeweils in einer Durchflussrichtung wirksamen Durchflussöffnungen weisen an ihren Austrittsquerschnitten Steuerkanten auf, die unterschiedlich weit über die Stützfläche des Grundkörpers hinausragen können bzw. bei denen die Höhe, um die die Steuerkanten die Stützfläche überragen, mit zunehmendem radialen Abstand von der Mitte des Grundkörpers unterschiedlichen Verläufen folgt. Dadurch erhält man einen Kennlinienverlauf der Dämpfungskraft, der in der Druckstufe und in der Zugstufe sehr gut an die in der Praxis geforderten Dämpfungskraftverläufe angepasst bzw. anpassbar ist. Des Weiteren besteht die Möglichkeit, dass sich die Höhenverläufe der Steuerkanten an den Austrittsquerschnitten der ersten Durchflussöffnungen und der zweiten Durchflussöffnungen unterscheiden.

Die Stützfläche des Grundkörpers ist zweckmäßig kreisringförmig ausgebildet. Der Grundkörper weist vorzugsweise in seinem Mittelpunkt eine zentrale Bohrung auf, durch die ein Gewindebolzen hindurch gesteckt werden kann. Mit Hilfe von Muttern, die auf den Gewindebolzen aufgeschraubt werden, können die Ventilscheiben gegen die Stützfläche des Grundkörpers gespannt werden. Auf diese Weise sind die Ventilscheiben mit Hilfe einfacher Befestigungsmittel so auf dem Grundkörper befestigbar, dass sie unter Ausbildung einer Durchbiegung und damit einer Vorspannkraft dicht auf den Steuerkanten aufliegen. So kann die Ventilscheibe mit einer Vorspannkraft gegen die Steuerkanten gedrückt werden, ohne dass ein separates Federelement zur Erzeugung der Vorspannkraft erforderlich ist.

Der Grundkörper des Dämpfungselementes lässt sich einfach und kostengünstig als einteiliges Sinterbauteil herstellen. Die Steuerkanten können zur Bildung eines stets durchströmbaren Voröffnungsquerschnitts entlang ihres Umfanges eine lokale Absenkung aufweisen. Ferner liegt es im Rahmen der Erfindung, dass die Ventilscheiben als Bypassscheiben ausgebildet sind.

Im Folgenden wird die Erfindung anhand einer ein Ausführungsbeispiel darstellenden Zeichnung näher erläutert. Im Einzelnen zeigen
- **Fig. 1**: ein nicht unter den beanspruchten Gegenstand fallendes Dämpfungselement mit mehreren ersten und zweiten Durchflussöffnungen in der Draufsicht;
- **Fig. 2**: einen axialen Halbschnitt entlang der Linie A-A gemäß Fig. 1;
- **Fig. 3**: einen axialen Halbschnitt gemäß der Linie B-B in Fig. 1;
- **Fig. 4**: eine perspektivische Ansicht des Dämpfungselementes gemäß Fig. 1;
- **Fig. 5**: eine Draufsicht auf ein erfindungsgemäßes Dämpfungselement
- **Fig. 6**: einen axialen Halbschnitt entlang der Linie B-B gemäß Fig. 5;
- **Fig. 7**: einen axialen Halbschnitt entlang der Linie A-A gemäß Fig. 5;
- **Fig. 8**: eine perspektivische Ansicht des Dämpfungselementes gemäß Fig. 5;
- **Fig. 9**: eine Draufsicht auf das Dämpfungselement gemäß Fig. 5 von der im Vergleich zu Fig. 5 anderen Seite;
- **Fig. 10**: eine Seitenansicht eines erfindungsgemäßen Dämpfungselementes gemäß Fig. 9;
- **Fig. 11**: eine perspektivische Ansicht des Dämpfungselementes gemäß Fig. 9 mit teilweise freigeschnittener Ventilscheibe;
- **Fig. 12**: eine perspektivische Ansicht des Dämpfungselementes gemäß Fig. 9 mit einer Ventilscheibe;
- **Fig. 13**: ein Kraft-Geschwindigkeits-Diagramm mit einer degressiv verlaufenden Dämpfungskennlinie nach dem Stand der Technik;
- **Fig. 14**: ein Kraft-Geschwindigkeits-Diagramm eines mit einem erfindungsgemäßen Dämpfungselement ausgestatteten Schwingungsdämpfers mit einer erfindungsgemäß modifizierten degressiven Dämpfungskraftkennlinie;
- **Fig. 15**: eine perspektivische Ansicht eines als Arbeitskolben eines Schwingungsdämpfers auf einer Kolbenstange montierten Dämpfungselementes;
- **Fig. 16**: eine Draufsicht auf ein erfindungsgemäßes Dämpfungselement mit speziell gestalteten Steuerkanten;
- **Fig. 17a**: ein als Komfortventil eines Schwingungsdämpfers innerhalb einer Dämpfungskraftsteuerungseinrichtung angeordnetes Dämpfungselement;
- **Fig. 17b**: eine Schnittdarstellung des Details A des als Komfortventil ausgebildeten Dämpfungselementes gemäß Fig. 17a;
- **Fig. 18**: eine weitere Ausgestaltung des Grundkörpers eines erfindungsgemäßen Dämpfungselementes in der Draufsicht;
- **Fig. 19**: den Schnitt A-A aus Fig. 18;
- **Fig. 20**: den Schnitt E-E aus Fig. 18;
- **Fig. 21 und 22**: Dämpfungskraftverläufe erfindungsgemäßer Dämpfungselemente in einem Kraft-Geschwindigkeits-Diagramm.

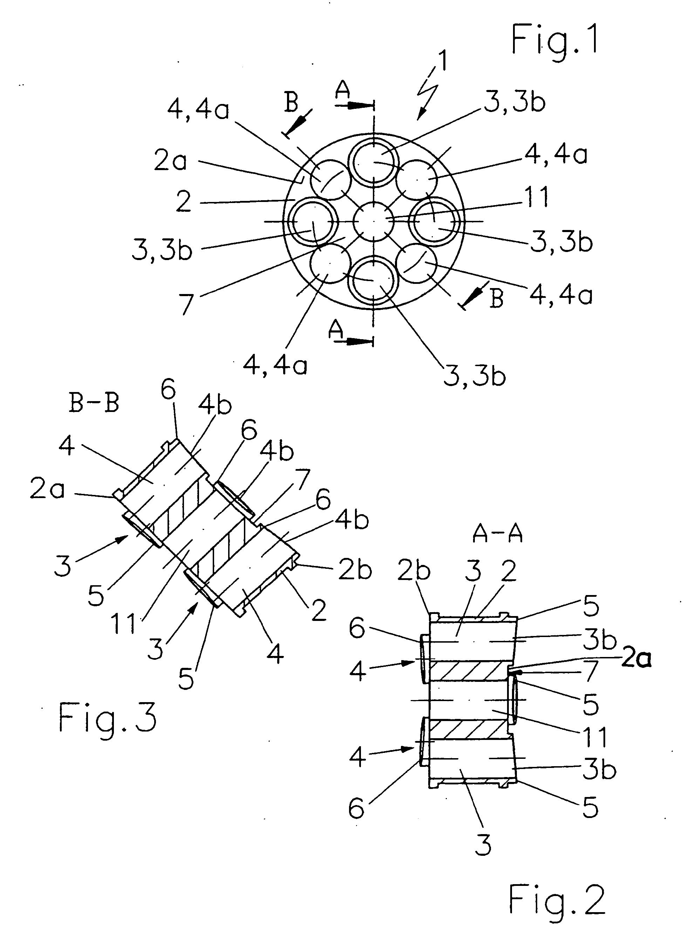

Das in Fig. 1 dargestellte Dämpfungselement 1 weist einen Grundkörper 2 auf, in welchem Durchflussöffnungen 3, 4 angeordnet sind. Im Zentrum des kreisscheibenförmigen Grundkörpers 2 ist eine zentrale Bohrung 11 angeordnet. Die Durchflussöffnungen 3, 4 weisen bei diesem Ausführungsbeispiel einen kreisförmigen Querschnitt auf. Bei dem hier dargestellten Ausführungsbeispiel sind vier erste Durchflussöffnungen 3 und vier zweite Durchflussöffnungen 4 dargestellt. Der mittlere, um die Bohrung 11 herum angeordnete Bereich des Grundkörpers 2 bildet eine Stützfläche 7 für die nicht dargestellten Ventilscheiben, die die Durchflussöffnungen zumindest teilweise abdecken.

Bei der in Fig. 1 dargestellten Draufsicht schaut der Betrachter auf die Austrittsquerschnitte 3b der Durchflussöffnungen 3 und auf die Eintrittsquerschnitte 4a der Durchflussöffnungen 4. Im Einbauzustand werden die ersten Durchflussöffnungen 3 nur dann von Dämpfungsflüssigkeit durchströmt, wenn der Schwingungsdämpfer sich in der Zugstufendämpfung befindet. Die Durchflussöffnungen 4 werden dagegen nur dann von Dämpfungsflüssigkeit durchströmt, wenn sich der Schwingungsdämpfer in der Druckstufendämpfung befindet.

Die Austrittsquerschnitte 3b der Durchflussöffnungen 3 weisen Steuerkanten 5 auf, welche die Oberfläche 2a des Grundkörpers 2 in axialer Richtung überragen. Im Gegensatz dazu weisen die Eintrittsquerschnitte 4a der Durchflussöffnungen 4 keine Steuerkanten auf. Die Eintrittsquerschnitte 4a liegen in der Ebene der Oberfläche 2a des Grundkörpers 2.

In Fig. 2 ist der Schnitt durch das Dämpfungselement 1 entlang der Linie A-A in Fig. 1 dargestellt. Der Grundkörper 2 weist eine Oberfläche 2a auf, die eine zusammenhängende Fläche bildet, die in einer Ebene angeordnet ist. Innerhalb dieser Ebene der Oberfläche 2a liegt der den Austrittsquerschnitten 3b der Durchflussöffnungen 3 zugewandte Öffnungsquerschnitt der zentralen Bohrung 11.

Die Durchflussöffnungen 3, durch die der in Fig. 2 dargestellte Schnitt verläuft, weisen einen kreisförmigen Austrittsquerschnitt 3b auf. Der Austrittsquerschnitt 3b jeder Durchflussöffnung 3 weist eine Steuerkante 5 auf, welche in axialer Richtung über die Oberfläche 2a des Grundkörpers 2 hinausragt.

In Fig. 2 ist gut zu erkennen, dass die Höhe bzw. das Maß, um das die Steuerkante 5 über die Oberfläche 2a des Grundkörpers 2 in axialer Richtung hinausragt, mit zunehmendem radialen Abstand von der Mittellinie des Dämpfungselementes ansteigt. Im radial äußeren Bereich des Dämpfungselementes ragt die Steuerkante 5 deutlich weiter über die Oberfläche 2a des Grundkörpers 2 hinaus als im radial inneren Bereich des Dämpfungselementes. Auf diese Weise wird eine zur Mitte des kreisscheibenförmigen Grundkörpers 2 schräg verlaufende Stirnfläche der Steuerkante 5 bereitgestellt, die eine Auflagefläche für eine in Fig. 2 nicht dargestellte Ventilscheibe bildet.

Die der Oberfläche 2a des Grundkörpers 2 gegenüberliegende Oberfläche 2b des Grundkörpers 2 ist axial zurückversetzt gegenüber den Steuerkanten 6 der Durchflussöffnungen 4. Der in Fig. 2 dargestellte Schnitt verläuft nicht durch die Durchflussöffnungen 4, sondern ausschließlich durch die Durchflussöffnungen 3 und die zentrale Bohrung 11 des Dämpfungselementes 1. In Fig. 2 ist deutlich zu erkennen, dass auch die Steuerkanten 6, die an den Austrittsquerschnitten 4b der Durchflussöffnungen 4 angeordnet sind, über die Oberfläche 2b des Grundkörpers 2 hinausragen. Dabei nimmt die Höhe bzw. das Maß, um die die Steuerkanten 6 über die Oberfläche 2b hinausragen, mit zunehmendem radialen Abstand von der Mittellinie des Dämpfungselementes 1 zu. Auf diese Weise bilden die Steuerkanten 6 eine schräg zur Mittellinie des Dämpfungselementes 1 verlaufende Anlagefläche für eine in Fig. 2 nicht dargestellte Ventilscheibe.

In Fig. 3 ist der Schnitt entlang der Linie B-B gemäß Fig. 1 dargestellt. Dieser Schnitt verläuft durch die Durchflussöffnungen 4 sowie die zentrale Bohrung 11 des Dämpfungselementes 1. Der Grundkörper 2 weist eine den Austrittsquerschnitten 4b der Durchflussöffnungen 4 zugeordnete Oberfläche 2b auf. Die Austrittsquerschnitte 4b weisen Steuerkanten 6 auf, welche über die Oberfläche 2b des Grundkörpers 2 in axialer Richtung hinausragen. Wiederum nimmt das Maß, um das die Steuerkanten 6 über die Oberfläche 2b des Grundkörpers 2 hinausragen, in radialer Richtung mit zunehmendem Abstand von der Mittellinie des Grundkörpers 2 zu. Dies bedeutet, dass im radial äußeren Bereich des Grundkörpers 2 die Steuerkante 6 stärker über die Oberfläche 2b des Grundkörpers 2 hinausragt als im radial inneren Bereich des Grundkörpers 2.

Auf der der Oberfläche 2b gegenüber liegenden Seite des Grundkörpers 2 ist dessen Oberfläche 2a angeordnet. Zu erkennen sind die Steuerkanten 5 der Austrittsquerschnitte 3b der Durchflussöffnungen 3. Die Öffnungsquerschnitte der zentralen Bohrung 11 liegen in den jeweiligen Oberflächen 2b bzw. 2a des Grundkörpers 2.

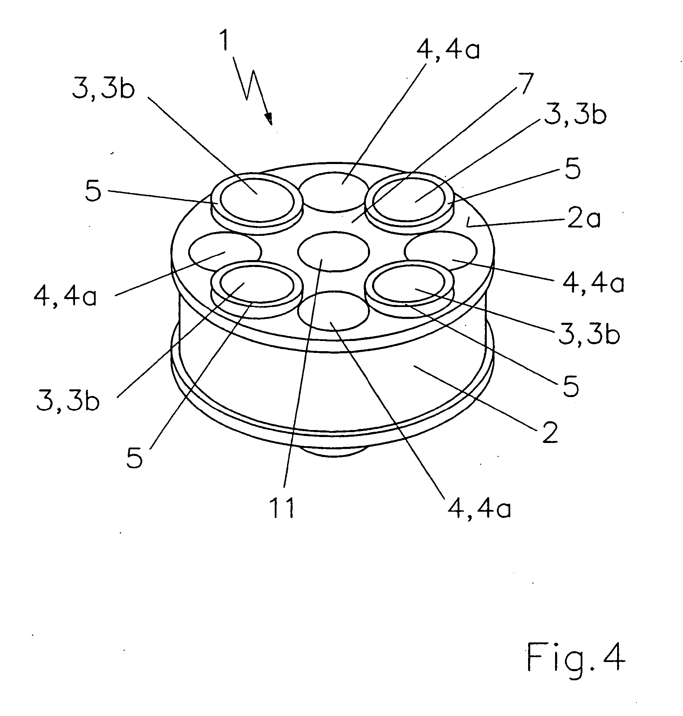

In Fig. 4 ist eine perspektivische Ansicht des Dämpfungselementes 1 dargestellt. Es ist gut zu erkennen, dass die Eintrittsquerschnitte 4a der Durchflussöffnungen 4 in einer Ebene liegen mit der Oberfläche 2a des Grundkörpers 2. Dagegen weisen die Austrittsquerschnitte 3b der Durchflussöffnungen 3 Steuerkanten 5 auf, die über die Oberfläche 2a des Grundkörpers 2 in axialer Richtung hinausragen. Die äußere Mantelfläche des Grundkörpers 2 weist einen nutförmigen Bereich auf, in den eine Dichtungsmanschette eingesetzt werden kann. Dies wäre z. B. dann erforderlich, wenn das Dichtungselement als Arbeitskolben eines Schwingungsdämpfers eingesetzt wird. Über die Dichtungsmanschette würde das Dämpfungselement dann gegenüber dem Druckrohr des Schwingungsdämpfers abgedichtet, so dass das Dämpfungselement den Innenraum des Druckrohres in zwei gegeneinander abgedichtete Arbeitsräume unterteilt.

In Fig. 4 ist deutlich zu erkennen, dass die Eintrittsquerschnitte 4a der Durchflussöffnungen 4 in derselben Ebene liegen wie die Oberfläche 2a des Grundkörpers 2, während die zur Mitte des Grundkörpers 2 hin abfallenden Steuerkanten 5 schräge Auflageflächen für eine in Fig. 4 nicht dargestellte Ventilscheibe zur Verfügung stellen. Über in Fig. 4 nicht dargestellte Spannelemente kann die nicht dargestellte Ventilscheibe in ihrem mittleren Bereich, d. h. im Bereich der zentralen Bohrung 11, gegen die Stützfläche 7 des Grundkörpers 2 gespannt werden. Auf diese Weise bildet sich zwischen der Ventilscheibe und den Steuerkanten 5, auf denen sie dichtend aufliegt, eine gezielte Vorspannung aus. Die Ventilscheibe ist durch den sich in radialer Richtung mit zunehmendem radialen Abstand von der Mitte des Grundkörpers 2 sich ändernden, d. h. ansteigenden Verlauf der Steuerkanten 5 so vorgespannt, dass sich die Ventilscheibe erst bei Erreichen eines bestimmten Druckes bzw. einer bestimmten Dämpferkolbengeschwindigkeit von den Steuerkanten 5 abhebt und so einen Durchflussquerschnitt durch die Durchflussöffnungen 3 freigibt. Über die Variation der Höhenänderung der Steuerkanten 5 in Abhängigkeit vom radialen Abstand von der Mitte des Grundkörpers 2 kann die Vorspannung und damit der Öffnungsdruck der Ventilscheibe variiert und damit gezielt eingestellt werden.

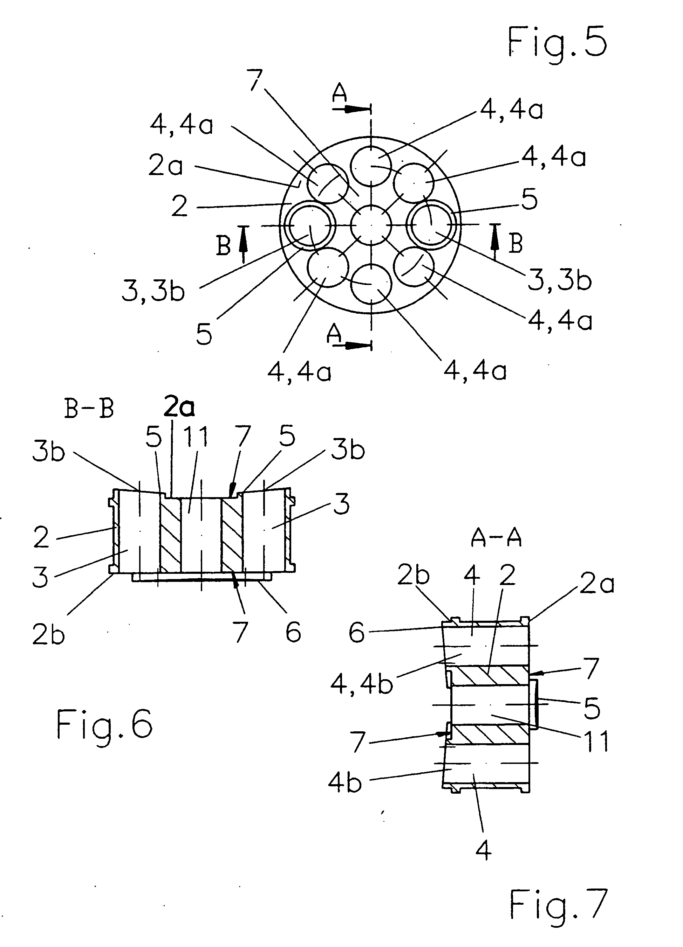

In Fig. 5 ist ein erfindungsgemäßes Dämpfungselement in Draufsicht dargestellt. Die dem Betrachter zugewandte Oberfläche 2a des Grundkörpers 2 ist wiederum von mehreren ersten Durchflussöffnungen 3 und mehreren zweiten Durchflussöffnungen 4 durchsetzt. Es sind zwei erste Durchflussöffnungen 3 und insgesamt sechs zweite Durchflussöffnungen 4 vorhanden.

Die ersten Durchflussöffnungen 3 weisen auf der Oberfläche 2a des Grundkörpers 2 angeordnete Austrittsquerschnitte 3b auf, die ihrerseits Steuerkanten 5 aufweisen. Diese Steuerkanten 5 ragen über die Oberfläche 2a des Grundkörpers 2 in axialer Richtung hinaus. Die Eintrittsquerschnitte 4a der Durchflussöffnungen 4 liegen dagegen in einer Ebene mit der Oberfläche 2a des Grundkörpers 2. An den Eintrittsquerschnitten 4a der Durchflussöffnungen 4 sind keine Steuerkanten ausgebildet.

In Fig. 6 ist der Schnitt entlang der Linie B-B der Fig. 5 dargestellt. An der Oberfläche 2a des Grundkörpers 2 weisen die Austrittsquerschnitte 3b der Durchflussöffnungen 3 umlaufende Steuerkanten 5 auf. Die zentrale Durchgangsbohrung 11 des Grundkörpers 2 ist in der Mitte des Dämpfungselementes angeordnet. Die Öffnungsquerschnitte der Durchgangsbohrung 11 liegen in der Ebene der Oberflächen 2a, 2b des Grundkörpers 2. Ausgehend von der Mittellinie des Grundkörpers 2 steigt die Höhe, um die die Steuerkanten 5 die Oberfläche 2a des Grundkörpers 2 überragen, mit zunehmendem radialen Abstand an, so dass sich eine von radial außen zur Mitte des Grundkörpers 2 hin schräg abfallende kreisförmige Auflagefläche durch die Stirnfläche der Steuerkante 5 ergibt. Im Einbauzustand liegt auf dieser Auflagefläche eine in Fig. 6 nicht dargestellte Ventilscheibe dichtend auf.

Kreisringförmig um die zentrale Durchgangsbohrung 11 angeordnet ist die Stützfläche 7. Auf dieser Stützfläche 7 kann sich die Ventilscheibe abstützen.

Um die gewünschte Vorspannung der Ventilscheibe zu erzielen, wird ein Gewindebolzen durch die zentralen Bohrungen der Ventilscheiben und die zentrale Durchgangsbohrung 11 des Grundkörpers 2 hindurchgesteckt. Mit Hilfe mindestens einer auf den Gewindebolzen aufschraubbaren Mutter werden sodann die Ventilscheiben gegen die ringförmige Stützfläche 7 gespannt. Auf diese Weise biegt sich die Ventilscheibe derart durch, dass sie die gewünschte Vorspannung annimmt und gleichzeitig dichtend auf den Stirnflächen der umlaufenden Steuerkanten 5 aufliegt.

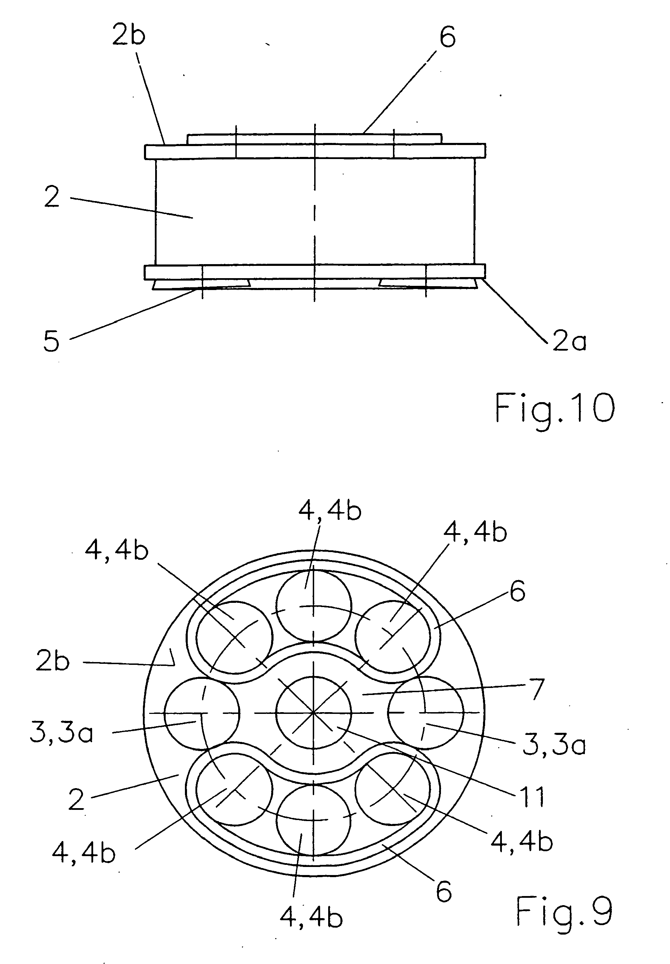

Auf der der Oberfläche 2a gegenüberliegenden Oberfläche 2b des Grundkörpers 2 weist der Grundkörper gemäß Fig. 6 eine Steuerkante 6 auf, welche am Austrittsquerschnitt der Durchflusskanäle 4 angeordnet ist. Das Dämpfungselement 1 gemäß der zweiten Ausführungsform der Erfindung ist mit seiner Oberfläche 2b in Fig. 9 in der Draufsicht dargestellt. Es ist gut zu erkennen, dass die nierenförmigen Steuerkanten 6 jeweils drei voneinander getrennte Durchflussöffnungen 4 mit jeweils kreisrunden Austrittsquerschnitten 4b einschließen. Es versteht sich, dass innerhalb des von den nierenförmigen Steuerkanten 6 eingeschlossenen Bereiches des Grundkörpers 2 auch mehr als drei Durchflussöffnungen 4 mit Austrittsquerschnitten 4b angeordnet sein könnten. Ebenso ist es selbstverständlich vorstellbar, dass der gesamte von den umlaufenden nierenförmigen Steuerkanten 6 eingeschlossene Bereich des Grundkörpers eine einzige, zusammenhängende Öffnung bildet.

Auch in Bezug auf die nierenförmigen Steuerkanten 6 steigt die Höhe, um die diese Steuerkanten die Oberfläche 2b des Grundkörpers 2 überragen, mit zunehmendem radialen Abstand vom Mittelpunkt des Grundkörpers 2 an. Dies ist in Fig. 7 gut zu erkennen.

In Fig. 10 ist das erfindungsgemäß ausgebildete Dämpfungselement in der Seitenansicht dargestellt.

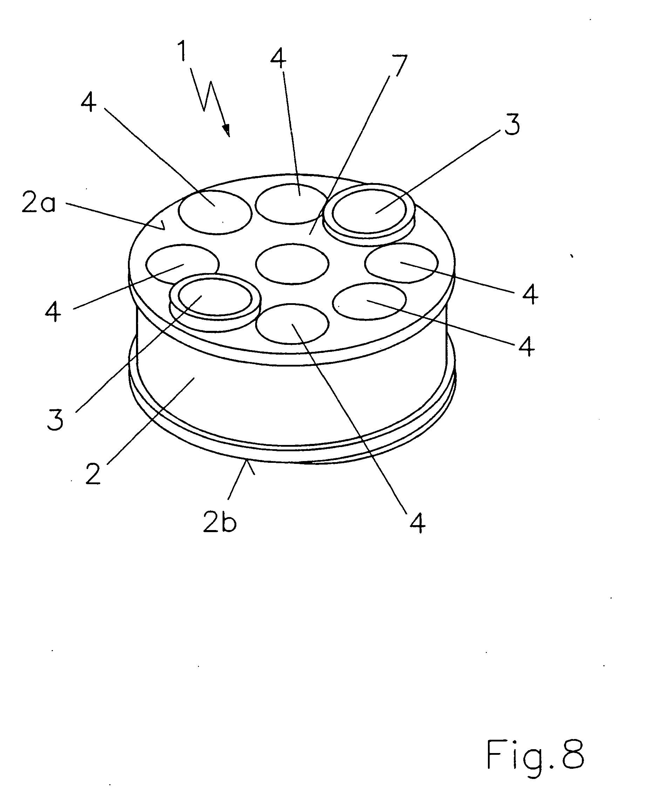

Fig. 8 zeigt das erfindungsgemäße Dämpfungselement gemäß der zweiten Ausführungsform der Erfindung in perspektivischer Ansicht.

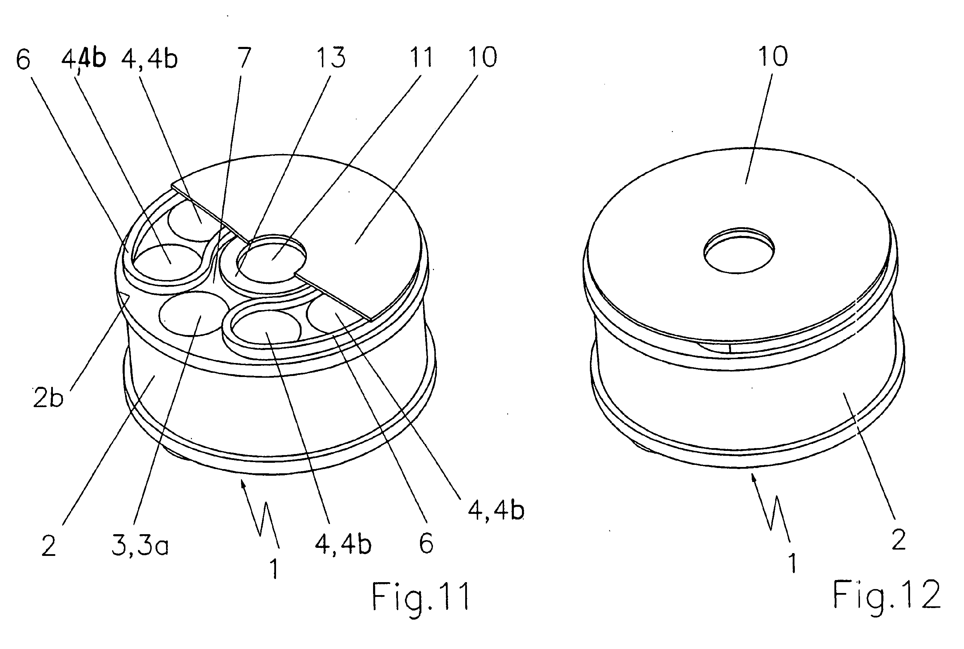

In Fig. 11 ist das erfindungsgemäße Dämpfungselement 1 in vergrößerter Darstellung in perspektivischer Ansicht gezeigt. Gut zu erkennen ist der Grundkörper 2 mit seiner Oberfläche 2b. In der Ebene der Oberfläche 2b liegt der Eintrittsquerschnitt 3a der Durchflussöffnung 3. Über die Oberfläche 2b hinaus ragen in axialer Richtung die nierenförmigen Steuerkanten 6. Die Steuerkanten 6 umschließen die Austrittsquerschnitte 4a der Durchflussöffnungen 4.

Im Zentrum des Grundkörpers 2 ist eine zentrale Durchgangsbohrung 11 angeordnet. Ringförmig um die zentrale Durchgangsbohrung 11 herum ist die Stützfläche 7 angeordnet, auf der sich die Ventilscheibe 10 abstützen kann. In dem in Fig. 11 dargestellten Ausführungsbeispiel ist die Ventilscheibe 10 nur zur Hälfte dargestellt, um den Blick auf die Stützfläche 7 und die auf dieser Stützfläche 7 aufliegende Unterlegscheibe 13 freizugeben. Die der Ventilscheibe 10 zugewandte Oberfläche der Unterlegscheibe 13 ragt in axialer Richtung weniger weit über die Oberfläche 2b des Grundkörpers 2 bzw. die Stützfläche 7 hinaus als der radial innen angeordnete Abschnitt der umlaufenden Steuerkante 6. Auf diese Weise wird sichergestellt, dass der innere Umfang der Ventilscheibe 10 über die in Fig. 11 nicht dargestellten Spannelemente so gegen die Stützfläche 7 gespannt wird, dass sich die Ventilscheibe 10 durchbiegt und gleichzeitig über dem gesamten Umfang der Steuerkante 6 dichtend auf dieser aufliegt. Die Unterlegscheibe 13 ist auswechselbar, so dass die Dicke der Unterlegscheibe 13 an die Dicke der Ventilscheibe und deren Rückfederungseigenschaften bzw. Vorspanneigenschaften, die maßgeblich von der Dicke der Ventilscheibe und deren Materialeigenschaften abhängen, anpassbar ist.

In Fig. 12 ist das Dämpfungselement gemäß Fig. 11 mit der vollständigen Ventilscheibe 10 dargestellt.

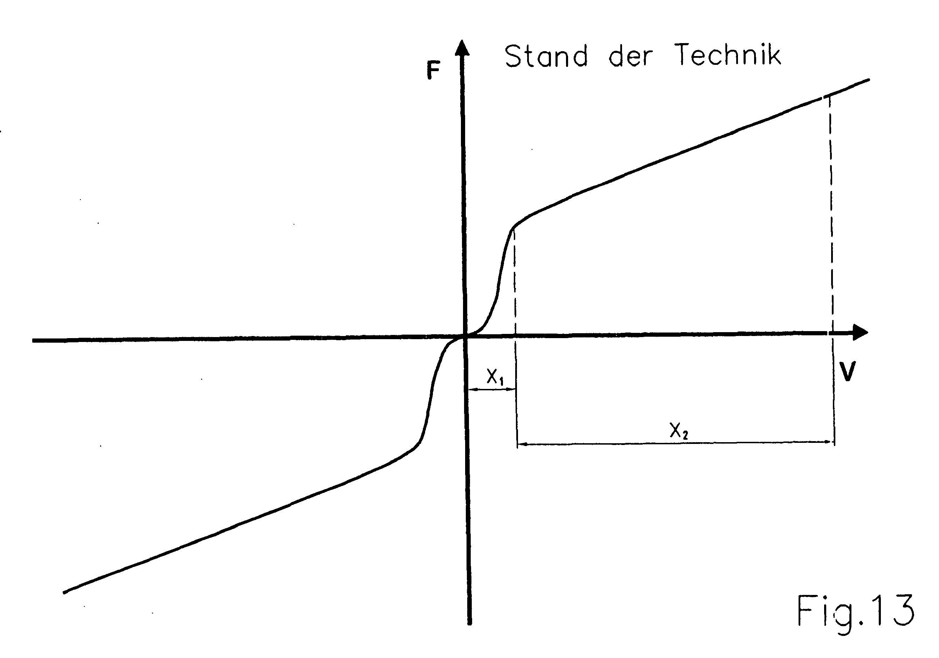

Fig. 13 zeigt ein Kraft-Geschwindigkeits-Diagramm mit einer degressiv verlaufenden Dämpfungskraftkennlinie gemäß Stand der Technik. Der in Fig. 13 dargestellte Verlauf der Dämpfungskraftkennlinie ist der typische Verlauf, der vorliegt, wenn ein Dämpfungselement mit vorgespannten Dämpfungsventilen in Form von Ventilfederscheibenpaketen verwendet wird. Zu erkennen ist ein erster, im Wesentlichen parabelförmig verlaufender Kennlinienabschnitt X₁. Maßgeblich für den Verlauf dieses Kennlinienabschnitts X₁ ist der so genannte Voröffnungsquerschnitt des Dämpfungsventils. Dieser Voröffnungsquerschnitt weist einen nach Art einer hydraulischen Blende wirkenden hydraulischen Widerstand auf, und die Dämpfungswirkung dieses Voröffnungsquerschnittes ist gekennzeichnet durch den progressiven Anstieg der Dämpfungskraft mit zunehmender Dämpferkolbengeschwindigkeit. Am Ende des Kennlinienabschnitts X₁ geht die Dämpfungskennlinie in einen im Wesentlichen linear verlaufenden Kennlinienabschnitt X₂ über. Dies geschieht deshalb, weil bei der am Ende des Abschnittes X₁ vorliegenden Dämpferkolbengeschwindigkeit der Punkt erreicht ist, an dem das vorgespannte Dämpfungsventil öffnet und auf diese Weise einen größeren Durchflussquerschnitt für die Dämpfungsflüssigkeit freigibt. Die Grundlagen dieser aus dem Stand der Technik wohlbekannten Dämpfungskraftverläufe sind beispielsweise in dem Lehrbuch Reimpell/Stoll, "Fahrwerktechnik: Stoß- und Schwingungsdämpfer" Vogel Buchverlag Würzburg, 2. Auflage 1989, Seiten 49 ff. nachzulesen.

Die Steigung der Dämpfungskennlinie im Abschnitt X₂ wird bestimmt durch die Federsteifigkeit der Ventilscheibe bzw. des Ventilscheibenpaketes. Sollen also einerseits zur Erhöhung des Fahrkomforts geringe Dämpfkräfte im Kennlinienabschnitt X₁ und andererseits zur Erreichung einer ausreichenden Fahrstabilität hohe Dämpfkräfte in dem bei hohen v-Werten liegenden Endbereich des Kennlinienabschnittes X₂ erreicht werden, dann muss in Kauf genommen werden, dass im Bereich mittlerer Dämpferkolbengeschwindigkeiten, also im mittleren Bereich des Abschnittes X₂, relativ große Dämpfungskräfte erzeugt werden. In diesem Bereich muss somit ein geringerer Fahrkomfort in Kauf genommen werden.

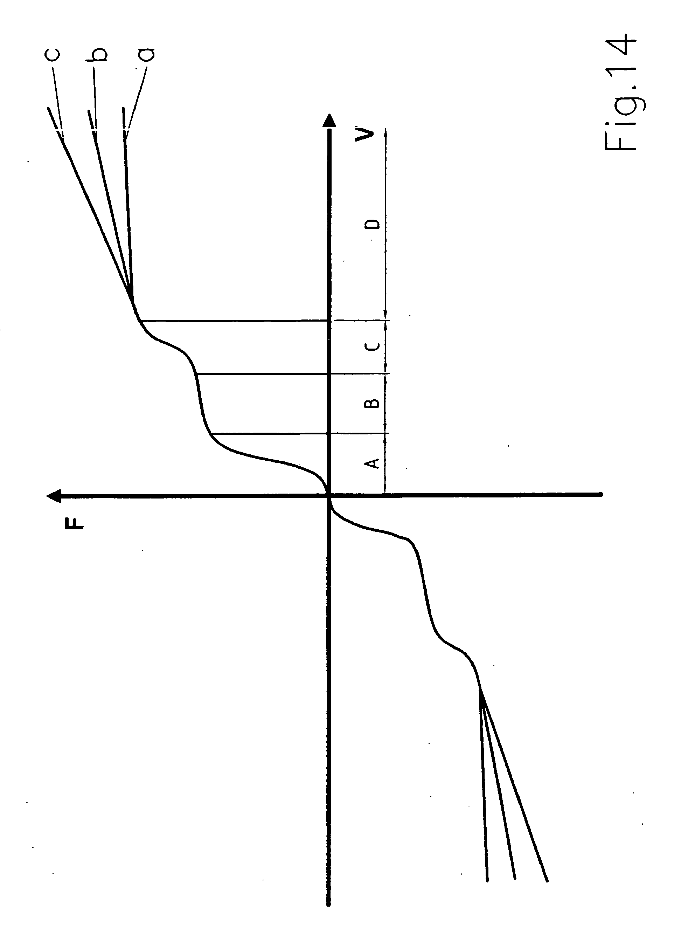

Mit dem erfindungsgemäßen Dämpfungselement ist es dagegen möglich, Dämpfungskennlinienverläufe zu erzeugen, die von dem wohlbekannten Verlauf der Dämpfungskennlinien gemäß Fig. 13 deutlich abweichen. So kann beispielsweise ein Dämpfungskraftkennlinienverlauf erreicht werden, wie er in Fig. 14 dargestellt ist. Die in dieser Fig. 14 dargestellte Dämpfungskennlinie weist vier Kennlinienabschnitte A, B, C, D auf. Der erste Kennlinienabschnitt A ist vergleichbar mit dem in Fig. 13 dargestellten Kennlinienabschnitt X₁. Ebenso ist der in Fig. 14 mit B bezeichnete Kennlinienabschnitt vergleichbar mit dem in Fig. 13 mit X₂ bezeichneten Kennlinienabschnitt. Darüber hinaus weist die Kennlinie gemäß Fig. 14 jedoch noch weitere, zusätzliche Abschnitte auf, nämlich einen weiteren Kennlinienabschnitt C und einen sich daran anschließenden weiteren Kennlinienabschnitt D.

Bei der Erfindung kann nun die im Abschnitt A (also bei geringen Dämpferkolbengeschwindigkeiten) erzeugte Dämpfkraft gering und gleichzeitig eine ebenfalls moderate Dämpfkraft in den Abschnitten B und C, d. h. bei mittleren Werten der Dämpferkolbengeschwindigkeit, eingestellt werden. So wird in den Bereichen A, B und C jeweils ein hoher Fahrkomfort erreicht. Die zur Erreichung der notwendigen Fahrstabilität bei hohen Dämpferkolben-geschwindigkeiten erforderliche hohe Dämpfkraft wird erst im Abschnitt D der Dämpfungskennlinie erzeugt. Bei welchen v-Werten die Abschnitte A, B und C jeweils enden, kann bei der Erfindung durch Modifikation des Verlaufes der Steuerkanten 5, 6 gezielt beeinflusst bzw. eingestellt werden. Daher kann der Dämpfkraftverlauf eines ein erfindungsgemäßes Dämpfungselement aufweisenden Schwingungsdämpfers in der Zug- und in der Druckstufe unabhängig voneinander an die im Einzelfall geforderten Werte flexibel angepasst werden.

Der in Fig. 14 dargestellte Kennlinienverlauf ist dadurch erzielbar, dass beispielsweise bei dem in der vorstehend beschriebenen Fig. 5 dargestellten Dämpfungselement 1 die beiden Durchflussöffnungen 3 eine Steuerkante 5 aufweisen, die in radialer Richtung mit zunehmendem radialen Abstand unterschiedlich zueinander ansteigen. Mit anderen Worten: Die Höhe, um die die in Fig. 5 links (d. h. auf 9 Uhr) dargestellte Steuerkante 5 über die Oberfläche 2a des Grundkörpers 2 hinausragt, steigt mit zunehmendem radialen Abstand vom Mittelpunkt des Grundkörpers 2 in einem geringeren Maße an als die in Fig. 5 auf der rechten Seite (d. h. auf 3 Uhr) dargestellte Steuerkante 5. Durch das unterschiedliche Maß des Anstieges der Überragungshöhe wird erreicht, dass die Vorspannung der Ventilscheibe 10 im Bereich der stärker überragenden Steuerkante 5 größer ist als die Vorspannung der Ventilscheibe in dem Bereich der weniger stark überragenden Steuerkante 5. Dies bewirkt, dass sich die Ventilscheibe nacheinander bei Erreichen unterschiedlicher Werte der Dämpferkolbengeschwindigkeit, die mit unterschiedlichen Druckdifferenzen korrespondieren, von den jeweiligen Steuerkanten abhebt und so nacheinander größere Durchströmungsquerschnitte freigibt.

Der Abschnitt A der in Fig. 14 dargestellten Dämpfungskraftkennlinie wird analog zu dem Verlauf gemäß Fig. 13 durch den Voröffnungsquerschnitt definiert, den das Dämpfungsventil aufweist. Der Voröffnungsquerschnitt kann beispielsweise durch eine Lücke oder Ausnehmung in der umlaufenden Steuerkante 5, 6 der Durchflussöffnungen 3, 4 oder in der Ventilscheibe 10 dargestellt werden. Ist ein bestimmter Wert der Dämpferkolbengeschwindigkeit erreicht, so hebt sich die Ventilscheibe 10 nur im Bereich der weniger weit über die Oberfläche 2a, 2b des Grundkörpers 2 überragenden Steuerkante 5, 6 ab. Dadurch wird ein größerer Durchflussquerschnitt für die Dämpfungsflüssigkeit freigegeben, so dass (analog zu Fig. 13) sich der im Wesentlichen linear verlaufende Dämpfungskennlinienabschnitt B ergibt. Irgendwann ist ein Wert für die Dämpferkolbengeschwindigkeit erreicht, bei dem die Durchbiegung der Ventilscheibe 10 im Bereich der weniger stark überragenden Steuerkante 5, 6 so groß ist, dass der freie Durchflussquerschnitt der zugehörigen Durchflussöffnung 3, 4 die Größe des hydraulischen Widerstandes des Dämpfungsventils bestimmt. In diesem Bereich weist die Dämpfungskennlinie dann den Verlauf gemäß Abschnitt C in Fig. 14 auf. Der Verlauf der Kennlinie im Abschnitt C wird somit hervorgerufen durch den nach Art einer Drosselblende wirkenden hydraulischen Durchflusswiderstand der Durchflussöffnung 3, 4, die die weniger stark überragende Steuerkante 5, 6 aufweist.

Steigt die Dämpferkolbengeschwindigkeit weiter an, so erreicht sie einen Wert, bei dem sich die Ventilscheibe 10 schließlich auch im Bereich der stärker überragenden Steuerkante von dieser abhebt und auf diese Weise einen wiederum vergrößerten Strömungsquerschnitt freigibt. Dadurch wird ein weiterer, im Wesentlichen linear verlaufender Dämpfungskraftkennlinienabschnitt D erreicht.

In Fig. 14 sind im Kennlinienabschnitt D drei unterschiedliche lineare Kennlinienverläufe a, b und c als Alternativen dargestellt. Mit welcher Steigung der lineare Bereich im Kennlinienabschnitt D der Dämpfungskraftkennlinie verläuft, ist abhängig von der Federsteifigkeit der Ventilscheibe bzw. des Ventilscheibenpaketes im Bereich der stärker überragenden Steuerkante 5, 6.

Aus Fig. 14 wird ersichtlich, dass durch unterschiedliche Ausgestaltungen der in einer Dämpfungsrichtung (Zugdämpfung oder Druckdämpfung) wirksamen Durchflussöffnungen 3, 4 mehrere degressiv verlaufende Dämpfungskennlinienabschnitte "hintereinander geschaltet" werden können. Dadurch kann die Dämpfungskraft sehr flexibel an gestellte Anforderungen angepasst werden.

Die Dämpfungskraftverläufe gemäß den Fig. 13 und 14 wurden voranstehend lediglich für den im ersten Quadranten (Zugdämpfung) dargestellten Kennlinienverlauf beschrieben. Analoges gilt für den im dritten Quadranten (Druckdämpfung) dargestellten Kennlinienverlauf.

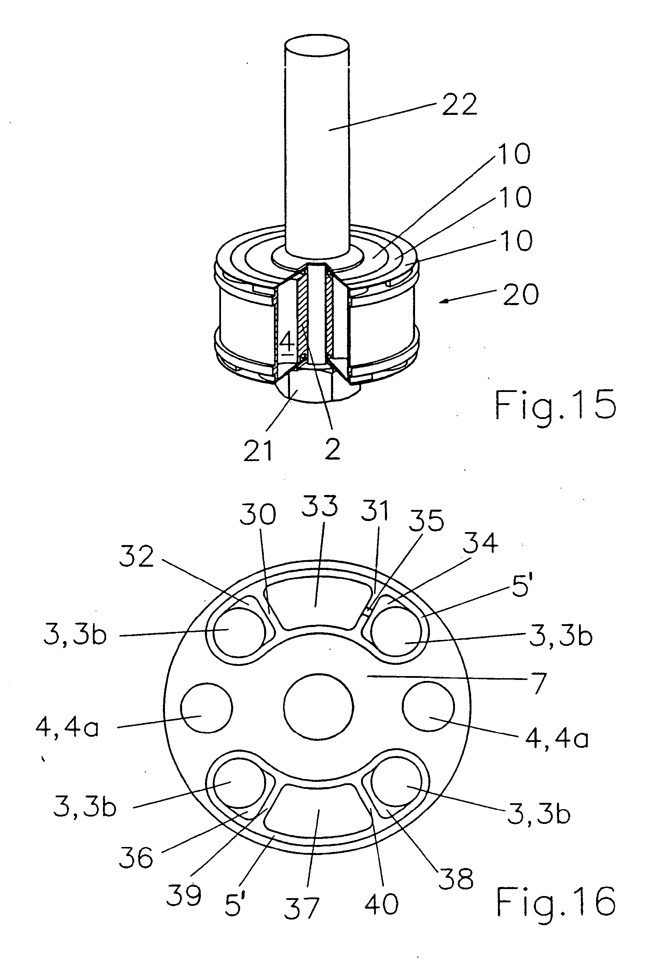

In Fig. 15 ist das erfindungsgemäße Dämpfungselement als Arbeitskolben 20 eines nicht näher dargestellten hydraulischen Schwingungsdämpfers ausgebildet. Der Arbeitskolben 20 ist mittels einer Mutter 21 in aus dem Stand der Technik bekannter Weise mit der Kolbenstange 22 verspannt. Der in Fig. 15 gezeigte Freischnitt ist durch eine zweite Durchflussöffnung 4 geführt. Gut zu erkennen ist der ringförmige Grundkörper 2 des Arbeitskolbens 20. Bei dem in Fig. 15 dargestellten Ausführungsbeispiel sind auf der Oberseite des Arbeitskolbens 20 drei Ventilscheiben 10 vorgesehen, wobei die einzelnen Ventilscheiben unterschiedliche Durchmesser aufweisen. Durch die gezielte Dimensionierung der Durchmesser der einzelnen Ventilscheiben 10 kann die Steifigkeit der Ventilanordnung in an sich bekannter Weise gezielt eingestellt werden. Auf der Unterseite des Arbeitskolbens 20 kann entweder dieselbe oder eine andere Ventilscheibenanordnung wie auf der Oberseite vorgesehen sein. Durch die gezielte Wahl unterschiedlicher Ventilscheibenanordnungen, d.h. eines unterschiedlichen Ventilscheibenaufbaus auf der Ober- und der Unterseite des Arbeitskolbens 20 kann sein Dämpfungsverhalten in Zug- und Druckrichtung unterschiedlich eingestellt werden.

In Fig. 16 ist ein erfindungsgemäßes Dämpfungselement in einer weiteren Ausführungsform in der Draufsicht dargestellt. Analog zu der Darstellung gemäß Fig. 1 schaut der Betrachter auf die Austrittsquerschnitte 3b der Durchflussöffnungen 3 und auf die Eintrittsquerschnitte 4a der Durchflussöffnungen 4. Die die Durchflussöffnungen 3 umschließende sichelförmige Steuerkante 5 weist im Unterschied zu den sichelförmigen Steuerkanten 6 gemäß Fig. 9 im Wesentlichen radial verlaufende Stege 30, 31 auf. Diese Stege 30, 31 sind Bestandteil der Steuerkante 5, d. h. auch in Bezug auf die Stege 30, 31 steigt die Höhe, um die sie die Stützfläche 7 überragen, mit zunehmendem radialen Abstand vom Mittelpunkt des Dämpfungselementes an. Die in Fig. 16 nicht dargestellten Ventilscheiben 10 liegen somit auch dichtend an den Stegen 30, 31 an.

Die Stege 30, 31 unterteilen den durch die sichelförmige Steuerkante 5 umschlossenen Raum in drei Teilräume 32, 33 und 34. In den Steg 31 ist eine Nut 35 eingeprägt, die die Teilräume 34 und 33 miteinander verbindet. Ohne die Nut 35 würden bei einer Durchströmung der Durchflussöffnungen 3 mit Dämpfungsflüssigkeit lediglich die Teilräume 32 und 34 mit dem Druck der Dämpfungsflüssigkeit beaufschlagt. Dadurch, dass die Nut 35 in den Steg 31 eingeprägt ist, wird der aus den Teilräumen 34 und 33 bestehende Raum mit dem Druck der Dämpfungsflüssigkeit beaufschlagt. Somit steht wegen der Nut 35 eine wesentlich größere Fläche zur Verfügung, die mit der durch die in Fig. 16 rechte Durchflussöffnung strömende Dämpfungsflüssigkeit beaufschlagt wird. Der Druck der Dämpfungsflüssigkeit wirkt somit auf eine wesentlich größere Fläche, so dass eine deutlich größere Öffnungskraft auf die (in Fig. 16 nicht dargestellten) Ventilscheiben 10 wirkt. Bei einem bestimmten Druck heben sich die Ventilscheiben 10 somit bereits wesentlich früher von der Steuerkante 5 ab als sie dies tun würden, wenn die Nut 35 nicht vorhanden und die Teilräume 34 und 33 somit nicht miteinander verbunden wären. Auch wird durch die Verbindung der Teilräume 34, 33 eine deutlich größere Abströmfläche für die Dämpfungsflüssigkeit freigegeben als dies ohne Nut 35 der Fall wäre.

In der in Fig. 16 unten dargestellten sichelförmigen Steuerkante 5' weisen dagegen beide Stege 39, 40 keine Nut auf. Daher sind die nebeneinander liegenden Teilräume 36, 37 und 38, 37 nicht miteinander verbunden. Im Bereich dieser Steuerkante 5' heben sich die Ventilscheiben 10 erst bei einem höheren Druck von der Steuerkante 5' ab als sie dies im Bereich der Steuerkante 5 tun. Auf diese Weise kann die Dämpfungscharakteristik des erfindungsgemäßen Dämpfungselementes durch einfaches Einbringen einer oder mehrerer Nuten in die Stege der sichelförmigen Steuerkanten 5, 5' weiter variiert werden.

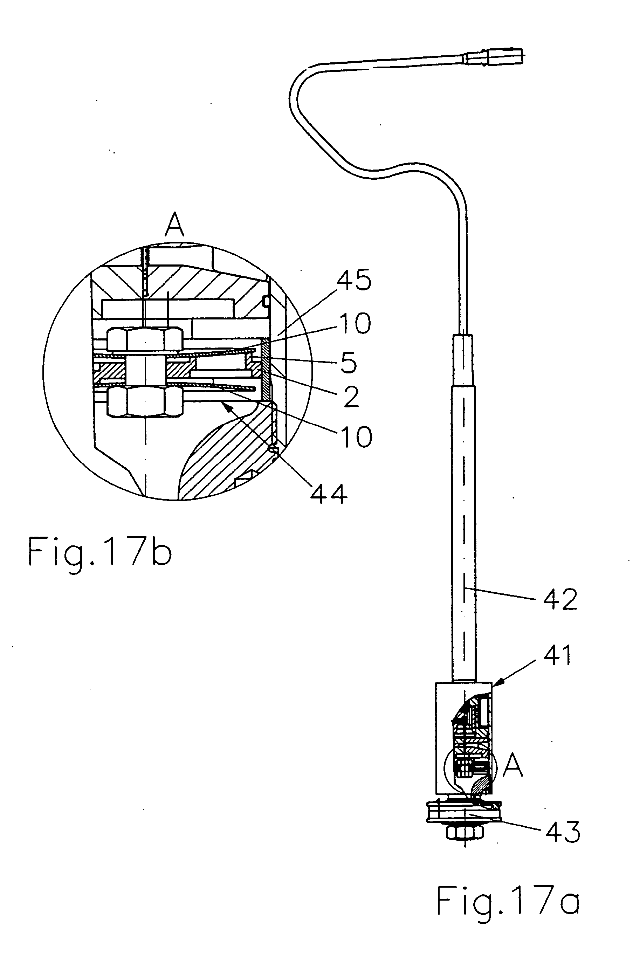

In den Fig. 17a und 17b ist ein erfindungsgemäßes Dämpfungselement dargestellt, das als so genanntes Komfortventil 44 innerhalb einer Dämpfungskraftsteuerungseinrichtung 41 angeordnet ist. Derartige Dämpfungskraftsteuerungseinrichtungen mit einem Komfortventil und ihre in Fig. 17a gezeigte Anordnung zwischen der Kolbenstange 42 und dem Arbeitskolben 43 des Schwingungsdämpfers sind aus dem Stand der Technik an sich bekannt. Die Fig. 17a und 17b sollen verdeutlichen, dass das erfindungsgemäße Dämpfungselement flexibel einsetzbar ist, nämlich nicht nur als Arbeitskolben eines Schwingungsdämpfers, sondern auch als ein mit einer Dämpfungskraftsteuerungseinrichtung zusammen wirkendes Dämpfungsventil.

Fig. 17b zeigt eine vergrößerte Darstellung des Komfortventils 44, das innerhalb eines Gehäuses 45 der Dämpfungskraftsteuerungseinrichtung 41 angeordnet ist. Gut zu erkennen sind die sich auf den Steuerkanten 5 des Grundkörpers 2 abstützenden Ventilscheiben 10.

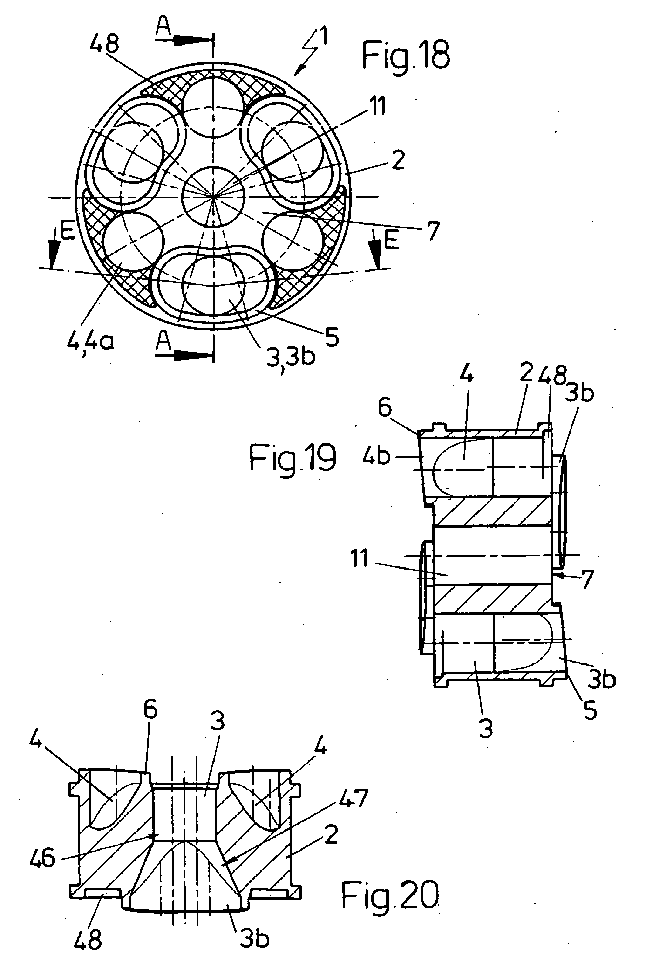

Der in den Fig. 18 bis 20 dargestellte Grundkörper 2 ist ebenfalls als einteilige Kreisscheibe ausgebildet und kann beispielsweise als Sinterkörper gefertigt werden. Der Grundkörper 2 weist eine Mehrzahl erster Durchflussöffnungen 3 mit jeweils einem Eintrittsquerschnitt 3a in einer ersten Stirnseite des Grundkörpers sowie eine Mehrzahl zweiter Durchflussöffnungen 4 mit jeweils einem Eintrittsquerschnitt 4a in einer gegenüberliegenden zweiten Stirnseite des Grundkörpers 2 auf. An den beiden Stirnseiten sind ähnlich wie in den Fig. 11 und 12 kreisförmige Ventilscheiben 10 befestigbar, die an einer mittig angeordneten Stützfläche 7 des Grundkörpers 2 anliegen und Austrittsquerschnitte 3b, 4b der Durchflussöffnungen 3, 4 zumindest teilweise verschließen. Die Austrittsquerschnitte sind von Steuerkanten 5, 6 umgeben, welche Anlageflächen für die Ventilscheiben 10 bilden und die Stützfläche 7 sowie die Eintrittsquerschnitte 3a, 4a überragen. Wie bei den zuvor beschriebenen Ausführungen steigt die Höhe der Steuerkanten 5, 6 mit zunehmendem radialen Abstand vom Mittelpunkt des kreisscheibenförmigen Grundkörpers 2 an. Der Darstellung in Fig. 18 sowie der Schnittdarstellung in Fig. 20 entnimmt man, dass die Durchflussöffnungen 3, 4 einen zylindrischen Abschnitt 46 aufweisen, der in einen von den Steuerkanten 5, 6 berandeten größeren Austrittsquerschnitt einmündet. Der zylindrische Abschnitt 46 geht mit einer stetigen Querschnittserweiterung 47 in den von der Steuerkante 5 bzw. 6 berandeten Austrittsquerschnitt über. Die Querschnittserweiterung 47 ist im Ausführungsbeispiel als konische Fläche ausgebildet, könnte aber auch als konvex gekrümmte Fläche gestaltet werden. Die Austrittsquerschnitte 3b, 4b weisen einen nierenförmigen Grundriss auf und sind in Umfangsrichtung im Wechsel mit jeweils einem Eintrittsquerschnitt 4a bzw. 3a angeordnet. Im konkreten Ausführungsbeispiel weist der Grundkörper 2 sechs Durchflussöffnungen auf, wobei an beiden Stirnseiten drei von Steuerkanten 5, 6 berandete Austrittsquerschnitte 3b, 4b im Wechsel mit den Eintrittsquerschnitten 4a, 3a angeordnet sind. Die Eintrittsquerschnitte 3a, 4a bilden gegenüber der Stützfläche 7 Vertiefungen 48, deren Kontur in Fig. 18 zur Veranschaulichung mit einer Schraffur gekennzeichnet sind. Die Höhe der Vertiefungen 48 ergibt sich aus einer vergleichenden Betrachtung mit den Fig. 19 und 20. Die Abmessungen können beispielsweise etwa der Höhe der Steuerkanten entsprechen. Aus der Darstellung in Fig. 18 wird deutlich, dass die Vertiefungen 48 sich bis zum Außenrand oder zumindest bis zu einem randnahen Bereich des Grundkörpers 2 erstrecken und den Raum zwischen den Steuerkanten 5, 6 benachbarter Austrittsquerschnitte ausfüllen. Sie sind zwickelförmig ausgebildet und durch eine kreisbogenförmig gekrümmte Kante, von einem Zylinderabschnitt der Durchflussöffnung sowie seitlich von den Steuerkanten benachbarter Austrittsquerschnitte begrenzt.

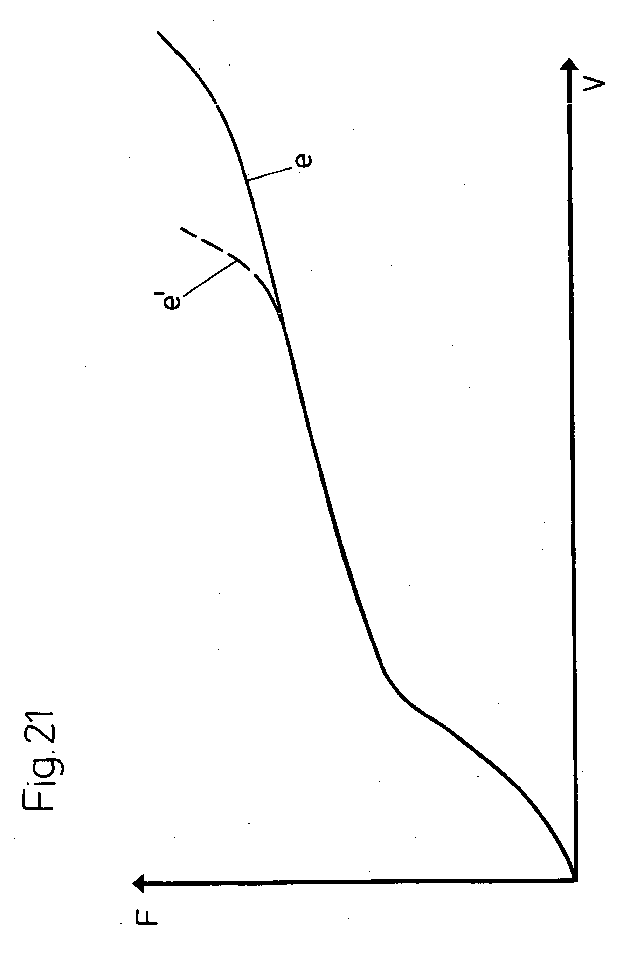

Die Steuerkanten 5, 6 der mit einer nierenförmigen Grundfläche ausgebildeten Austrittsquerschnitte 3b, 4b übernehmen eine wirksame Abstützfunktion für die verschließenden (nicht dargestellten) Ventilscheiben. Da die Abstützung an die Eintrittsquerschnitte 3a, 4a angrenzen, können gegebenenfalls dünne und leicht verformbare Ventilscheiben eingesetzt werden, ohne dass die Gefahr besteht, dass diese sich unter der Wirkung des zu den Einströmquerschnitten strömenden Fluids verformen. Durch die umlaufende Steuerkante 5, 6 wird ferner die Abdichtlänge zwischen der Ventilscheibe und dem Grundkörper 2 vergrößert. Schon bei kleineren Scheibenöffnungshüben können größere Mengen der Hydraulikflüssigkeit abfließen. Dies führt zu einem gewünschten flachen Degressionskurvenverlauf d gemäß der Darstellung in Fig. 21. Die Fig. 21 zeigt den Verlauf in einem F-v-Diagramm im Vergleich zu dem gestrichelt dargestellten Verlauf d' eines Dämpfungselementes, dessen Austrittsquerschnitte kreisförmig gestaltet sind und dem Querschnitt der Durchflussöffnungen entsprechen.

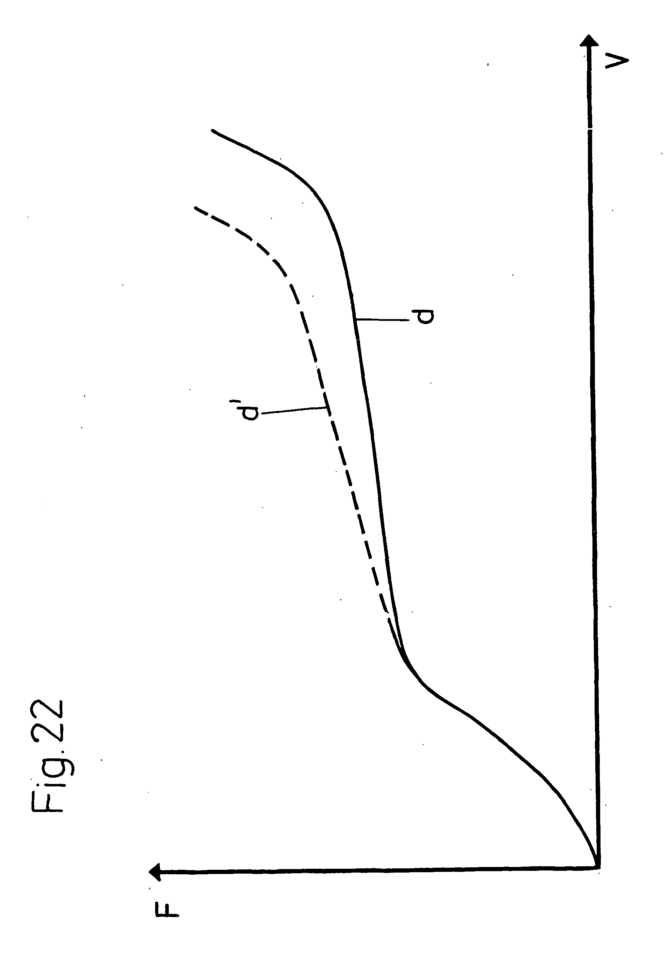

Auch die in Fig. 18 erläuterte Geometrie der Eintrittsquerschnitte wirkt sich positiv auf das Dämpfungsverhalten aus. Dies zeigt die Darstellung in Fig. 22. Aufgetragen sind die Dämpfungskraftverläufe e, e' von Dämpfungselementen, die sich lediglich hinsichtlich der Geometrie der Eintrittsquerschnitte für das Fluid unterscheiden. Die gestrichelte Kurve zeigt die Dämpfungskennlinie e' eines Dämpfungselementes, dessen Eintrittsquerschnitte kreisförmig ausgebildet sind und jeweils dem Querschnitt der Durchflussöffnungen entsprechen. Die Kurve e zeigt die Dämpfungskennlinie eines Dämpfungselementes, dessen Eintrittsquerschnitte für das Fluid zwickelförmige Vertiefungen bilden, die sich bis zu einem randnahen Bereich des Grundkörpers erstrecken und den Raum zwischen den Steuerkanten benachbarter Austrittsquerschnitte ausfüllen. Durch die erfindungsgemäße Gestaltung der Eintrittsquerschnitte behält das Dämpfungselement seine degressive Charakteristik über einen größeren Geschwindigkeitsbereich bei. Der anschließende progressive Anstieg wird zu höheren Geschwindigkeiten hin verlagert.

## Patentansprüche

1. Dämpfungselement mit hydraulischer Dämpfungsflüssigkeit arbeitenden Schwingungsdämpfer mit
- einem als Kreisscheibe ausgebildeten einteiligen Grundkörper (2), der eine Mehrzahl erster Durchflussöffnungen (3) mit jeweils einem Eintrittsquerschnitt (3a) in einer ersten Stirnseite des Grundkörpers sowie eine Mehrzahl zweiter Durchflussöffnungen (4) mit jeweils einem Eintrittsquerschnitt (4a) in einer gegenüberliegenden zweiten Stirnseite des Grundkörpers aufweist,
- kreisförmigen Ventilscheiben (10) an beiden Stirnseiten des Grundkörpers (2), die an einer mittig angeordneten Stützfläche (13) des Grundkörpers (2) anliegen und Austrittsquerschnitte (3b, 4b) der Durchflussöffnungen zumindest teilweise verschließen,
wobei die Austrittsquerschnitte (3b, 4b) von Steuerkanten (5, 6) umgeben sind, welche Anlagefläche für die Ventilscheiben (10) bilden und die Stützfläche (13) sowie die Eintrittsquerschnitte (3a, 4a) überragen und wobei die Höhe der Steuerkanten (5, 6) mit zunehmendem radialen Abstand vom Mittelpunkt des kreisscheibenförmigen Grundkörpers (2) ansteigt, **dadurch gekennzeichnet, dass** die Durchflussöffnungen (3, 4) einen Strömungskanalabschnitt aufweisen, der in einen von den Steuerkanten (5, 6) überrandeten größeren Austrittsquerschnitt (3b, 4b) einmündet.

2. Dämpfungselement nach Anspruch 1, **dadurch gekennzeichnet, dass** der Strömungskanalabschnitt zylindrisch ausgebildet ist.

3. Dämpfungselement nach Anspruch 1 oder 2, **dadurch gekennzeichnet, dass** der Strömungskanalabschnitt (46) mit einer stetigen Querschnittserweiterung (47) in den von der Steuerkante berandeten Austrittsquerschnitt (3b, 4b) übergeht.

4. Dämpfungselement nach Anspruch 3, **dadurch gekennzeichnet, dass** die Querschnittseniveiterung (47) als konische oder als konvex gekrümmte Fläche ausgebildet ist.

5. Dämpfungselement nach einem der Ansprüche 1 bis 4, **dadurch gekennzeichnet, dass** die Austrittsquerschnitte (3b, 4b) einen nierenförmigen Grundriss aufweisen und in Umfangsrichtung im Wechsel mit jeweils einem Eintrittsquerschnitt (4a, 3a) angeordnet sind.

6. Dämpfungselement nach Anspruch 5, **dadurch gekennzeichnet, dass** der Grundkörper (2) Durchflussöffnungen (3, 4) aufweist, wobei an beiden Stirnseiten drei von Steuerkanten (5, 6) berandete Austrittsquerschnitte (3b, 4b) im Wechsel mit drei Eintrittsquerschnitten (4a, 3a) angeordnet sind.

7. Dämpfungselement nach einem der Ansprüche 1 bis 6, **dadurch gekennzeichnet, dass** die Eintrittsquerschnitte (3a, 4a) gegenüber der Stützfläche (7) Vertiefungen bilden, die sich bis zum Außenrand oder zumindest bis zu einem randnahen Bereich des Grundkörpers (2) erstrecken und den Raum zwischen den Steuerkanten (5 oder 6) benachbarter Austrittsquerschnitte ausfüllen.

8. Dämpfungselement nach Anspruch 7, **dadurch gekennzeichnet, dass** der Eintrittsquerschnitt (3a, 4a) als zwickelförmige Vertiefung (48) ausbildet ist, die von einem Zylinderabschnitt der Durchgangsöffnung sowie seitlich von den Steuerkanten (5 oder 6) benachbarter Austrittsquerschnitte (4b, 3b) begrenzt ist.

9. Dämpfungselement nach einem der Ansprüche 1 bis 8 , **dadurch gekennzeichnet, dass** die Höhe, um die die Steuerkanten (5, 6) der Austrittsquerschnitte (3b, 4b) die Stützfläche (7) des Grundkörpers (2) überragen, an mindestens einer Stirnseite des Grundkörpers von Durchflussöffnung zu Durchflussöffnung unterschiedlich in radialer Richtung ansteigt und/oder dass sich die Höhenverläufe der Steuerkanten (5, 6) an den Austrittsquerschnitten (3b, 4b) der ersten Durchflussöffnungen (3) und der zweiten Durchflussöffnungen (4) unterscheiden.

10. Dämpfungselement nach einem der Ansprüche 1 bis 9, **dadurch gekennzeichnet, dass** die Stützfläche (7) kreisringförmig ausgebildet ist.

11. Dämpfungselement nach einem der Ansprüche 1 bis 10, **dadurch gekennzeichnet, dass** der Grundkörper (2) in seinem Mittelpunkt eine zentrale Bohrung (11) aufweist und dass die Ventilscheiben (10) mittels eines durch die Bohrung (11) geführten Gewindebolzens und einer auf dem Gewindebolzen angeordneten Mutter gegen die Stützfläche (7) gespannt sind.

12. Dämpfungselement nach einem der Ansprüche 1 bis 11, **dadurch gekennzeichnet, dass** der Grundkörper (2) als Sinterbauteil ausgebildet ist.

13. Dämpfungselement nach einem Ansprüche 1 bis 12, **dadurch gekennzeichnet, dass** die Steuerkanten (5, 6) zur Bildung eines stets durchströmbaren Voröffnungsquerschnittes entlang ihres Umfangs eine lokale Absenkung aufweisen.

14. Dämpfungselement nach einem der Ansprüche 1 bis 13, **dadurch gekennzeichnet, dass** die Ventilscheiben als Bypassscheiben ausgebildet sind.

## Claims

1. A damping element of vibration dampers operating with hydraulic damping liquid, having
- a single-piece base body (2), which is formed as a circular disc and has a plurality of first flow openings (3), each having an entry cross section (3a) in a first end face of the base body and a plurality of second flow openings (4), each having an entry cross section (4a) in an opposite second end face of the base body,
- circular valve discs (10) on both end faces of the base body (2), which bear against a centrally arranged support surface (13) of the base body (2) and at least partially close exit cross sections (3b, 4b) of the flow openings,
wherein the exit cross sections (3b, 4b) are surrounded by control edges (5, 6), which form bearing surfaces for the valve discs (10) and project beyond the support surface (13) and the entry cross sections (3a, 4a), and wherein the height of the control edges (5, 6) increases with increasing radial distance from the centre point of the circular-disc-shaped base body (2), **characterised in that** the flow openings (3, 4) have a flow channel section (46) which opens into a larger exit cross section (3b, 4b) bordered by the control edges (5, 6).

2. The damping element according to Claim 1, **characterised in that** the flow channel section is cylindrical.

3. The damping element according to Claim 1 or 2, **characterised in that** the flow channel section (46) merges into the exit cross section (3b, 4b) bordered by the control edge with a continuous cross section widening (47).

4. The damping element according to Claim 3, **characterised in that** the cross section widening (47) is formed as a conical or convexly curved face.

5. The damping element according to one of Claims 1 to 4, **characterised in that** the exit cross sections (3b, 4b) have a kidney-shaped outline and are arranged alternately with in each case one entry cross section (4a, 3a) in the circumferential direction.

6. The damping element according to Claim 5, **characterised in that** the base body (2) has flow openings (3, 4), three exit cross sections (3b, 4b) which are bordered by control edges (5, 6) being arranged alternately with three entry cross sections (4a, 3a) on both end faces.

7. The damping element according to one of Claims 1 to 6, **characterised in that** the entry cross section (3a, 4a) form depressions with respect to the support surface (7), which depressions extend as far as the outer edge or at least as far as a region of the base body (2) close to the edge and fill the space between the control edges (5 or 6) of adjacent exit cross sections.

8. The damping element according to Claim 7, **characterised in that** the entry cross section (3a, 4a) is formed as a sickle-shaped depression (48) which is delimited by a cylindrical section of the through opening and laterally by the control edges (5 or 6) of adjacent exit cross sections (4b, 3b).

9. The damping element according to one of Claims 1 to 8, **characterised in that** the height by which the control edges (5, 6) of the exit cross sections (3b, 4b) project beyond the support surface (7) increases differently in the radial direction from flow opening to flow opening on at least one end face of the base body and/or that the height profiles of the control edges (5, 6) differ on the exit cross sections (3b, 4b) of the first flow openings (3) and of the second flow openings (4).

10. The damping element according to one of Claims 1 to 9, **characterised in that** the support surface (7) is circular-ring-shaped.

11. The damping element according to one of Claims 1 to 10, **characterised in that** the base body (2) has a central bore (11) in its centre point and that the valve discs (10) are braced against the support surface (7) by means of a threaded bolt guided through the bore (11) and a nut arranged on the threaded bolt.

12. The damping element according to one of Claims 1 to 11, **characterised in that** the base body (2) is formed as a sintered part.

13. The damping element according to one of Claims 1 to 12, **characterised in that** the control edges (5, 6) have a local dip along their circumference to form a pre-opening cross section through which flow can always pass.

14. The damping element according to one of Claims 1 to 13, **characterised in that** the valve discs are formed as bypass discs.

## Revendications

1. Elément d'amortissement comportant un amortisseur de vibrations fonctionnant avec un liquide d'amortissement hydraulique comportant
- un corps de base (2) en un seul tenant conçu comme un disque circulaire, qui présente une pluralité de premières ouvertures de circulation (3) avec respectivement une section transversale d'entrée (3a) dans une première face frontale du corps de base ainsi qu'une pluralité de deuxièmes ouvertures de circulation (4) avec respectivement une section transversale d'entrée (4a) dans une deuxième face frontale opposée du corps de base,
- des disques de soupape (10) circulaires sur les deux faces frontales du corps de base (2), qui viennent reposer sur une surface d'appui (13) disposée au centre du corps de base (2) et ferment au moins partiellement des sections transversales de sortie (3b,4b) des ouvertures de circulation,
dans lequel les sections transversales de sortie (3b,4b) sont entourées par des bords d'attaque (5,6), qui forment des surfaces d'appui pour les surfaces de soupape (10) et sont en saillie par rapport à la surface d'appui (13) ainsi que les sections transversales d'entrée (3a,4a) et dans lequel la hauteur des bords d'attaque (5,6) augmente à mesure que l'espacement radial par rapport au point central du corps de base (2) en forme de disque circulaire augmente, **caractérisé en ce que** les ouvertures de circulation (3,4) présentent une portion de canal d'écoulement (46), qui débouche dans une plus section transversale de sortie (3b,4b) bordée par les bords d'attaque (5,6).

2. Elément d'amortissement selon la revendication 1, **caractérisé en ce que** la portion de canal d'écoulement (46) a une configuration cylindrique.

3. Elément d'amortissement selon les revendications 1 ou 2, **caractérisé en ce que** la portion de canal d'écoulement (46) aboutit avec un élargissement constant de section transversale dans la section transversale de sortie (3b,4b) bordée par les bords d'attaque.

4. Elément d'amortissement selon la revendication 3, **caractérisé en ce que** l'élargissement de section transversale (47) est conçu comme une surface conique ou convexe incurvée.

5. Elément d'amortissement selon une des revendications 1 à 4, **caractérisé en ce que** les sections transversales de sortie (3b,4b) présentent une forme en plan en forme de rein et sont disposées dans la direction circonférentielle en alternance avec respectivement une section transversale d'entrée (4a,3a).

6. Elément d'amortissement selon la revendication 5, **caractérisé en ce que** le corps de base (2) présente des ouvertures de circulation (3,4), dans lequel sur les deux faces frontales sont disposées trois sections transversales de sortie (3b,4b) bordées par des bords d'attaque (5,6) en alternance avec trois sections transversales d'entrée (4a,3a).

7. Elément d'amortissement selon une des revendications 1 à 6, **caractérisé en ce que** les sections transversales d'entrée (3a,4a) forment des cavités par rapport à la surface d'appui (7), qui s'étendent jusqu'au bord extérieur ou au moins jusqu'à une zone proche du bord du corps de base (2) et remplissent l'espace entre les bords d'attaque (5 ou 6) de sections transversales de sortie voisines.

8. Elément d'amortissement selon la revendication 7, **caractérisé en ce que** la section transversale d'entrée (3a,4a) est conçue comme une cavité en forme de rein (48), qui est délimitée par une portion de cylindre de l'ouverture de circulation ainsi que latéralement par les bords d'attaque (5 ou 6) de sections transversales de sortie voisines (4b,3b).

9. Elément d'amortissement selon une des revendications 1 à 8, **caractérisé en ce que** la hauteur, à laquelle les bords d'attaque (5,6) des sections transversales de sortie (3b,4b) sont en saillie par rapport à la surface d'appui (7) du corps de base (2), augmente différemment dans la direction radiale sur au moins une face frontale du corps de base d'ouverture de circulation à ouverture de circulation et/ou **en ce que** le cours des hauteurs des bords d'attaque (5,6) diffère sur les sections transversales de sortie (3b,4b) des premières ouvertures de circulation (3) et des deuxièmes ouvertures de circulation (4).

10. Elément d'amortissement selon une des revendications 1 à 9, **caractérisé en ce que** la surface d'appui (7) est conçue en forme de couronne.

11. Elément d'amortissement selon une des revendications 1 à 10, **caractérisé en ce que** le corps de base (2) présente dans son point central un alésage central (11) et **en ce que** les disques de soupape (10) sont ajustés contre la surface d'appui (7) au moyen d'un goujon fileté inséré à travers l'alésage (11) et d'un écrou disposé sur le goujon fileté.

12. Elément d'amortissement selon une des revendications 1 à 11, **caractérisé en ce que** le corps de base (2) est conçu comme un composant en aggloméré.

13. Elément d'amortissement selon une des revendications 1 à 12, **caractérisé en ce que** les bords d'attaque (5,6) présentent un méplat local afin de former une section transversale de préouverture constamment traversée par un écoulement le long de leur circonférence.

14. Elément d'amortissement selon une des revendications 1 à 13, **caractérisé en ce que** les disques de soupape sont conçues comme des disques de dérivation.
